# EUROPÄISCHE PATENTSCHRIFT

(11) **EP 2 665 901 B1**
(45) Veröffentlichungstag und Bekanntmachung des Hinweises auf die Patenterteilung: **05.11.2014**
(21) Anmeldenummer: 11718958.9
(22) Anmeldetag: 12.04.2011
(51) Int. Cl.: F01N 3/20, B60K 15/04

(54) **EINFÜLLSTUTZEN FÜR EINEN FLÜSSIGKEITSTANK, INSBESONDERE HARNSTOFFTANK AN KRAFTFAHRZEUGEN**
FILLER NECK FOR A LIQUID TANK, IN PARTICULAR A UREA TANK, ON MOTOR VEHICLES
TUBULURE DE REMPLISSAGE POUR UN RÉSERVOIR DE LIQUIDE, EN PARTICULIER UN RÉSERVOIR D'URÉE, SUR DES VÉHICULES AUTOMOBILES

(43) Veröffentlichungstag der Anmeldung: 27.11.2013
(73) Patentinhaber: Reutter GmbH, 71397 Leutenbach (DE)
(72) Erfinder: KÖRBER, René, 71397 Leutenbach (DE); AL, Igor, 71409 Schwaikheim (DE); HORLACHER, Frank, 71332 Waiblingen (DE)
(74) Vertreter: DREISS Patentanwälte PartG mbB
(86) Internationale Anmeldenummer: PCT/EP2011/055706
(87) Internationale Veröffentlichungsnummer: WO 2012/139631

(56) Entgegenhaltungen:
- DE-A1- 10 051 212
- DE-A1-102004 036 508
- DE-A1-102007 051 922
- DE-A1-102008 020 213
- DE-U1-202007 018 245
- DE-U1-202009 008 380

## Beschreibung

Die vorliegende Erfindung bezieht sich auf einen Einfüllstutzen für einen Flüssigkeitstank für Harnstoff oder andere Flüssigkeiten an Kraftfahrzeugen oder stationären Anlagen nach dem Oberbegriff des Anspruchs (siehe z. B. DE 102007051922 A1).

Bekannt sind Einfüllstutzen für Harnstofftanks an Kraftfahrzeugen, die wie Einfüllstutzen von Kraftstofftanks rohrförmig ausgebildet und mit einem über Bajonettverschluss oder Gewinde verschließbaren Deckel versehen sind. Derartige Einfüllstutzen beziehungsweise der damit verbundene Flüssigkeitstank sind mittels Zapfpistole befüllbar. Da Harnstoff in erheblichem Maße geruchsbelästigend wirkt, besteht eine Alternative darin, den Harnstoff in Flaschen / Kanister abzufüllen, die auf dem Kopf stehend mit dem Einfüllstutzen verbunden werden, der zu diesem Zweck an die Harnstoffflaschen angepasst werden muss.

Aufgabe der vorliegenden Erfindung ist es, einen Einfüllstutzen für einen Flüssigkeitstank für Harnstoff oder andere Flüssigkeiten an Kraftfahrzeugen oder stationären Anlagen der eingangs genannten Art zu schaffen, der in einfacher Weise mit beiden Befüllvorgängen in Verbindung gebracht werden kann.

Zur Lösung dieser Aufgabe sind bei einem Einfüllstutzen für einen Flüssigkeitstank für Harnstoff oder andere Flüssigkeiten an Kraftfahrzeugen oder stationären Anlagen der eingangs genannten Art die im Anspruch 1 angegebenen Merkmale vorgesehen.

Durch die erfindungsgemäßen Maßnahmen ist in einfacher konstruktiver Weise eine Möglichkeit gegeben, den Einfüllstutzen für insbesondere Harnstofftanks bei beiden Befüllarten (Zapfpistole bzw. Flasche / Kanister) zu nutzen, ohne dass es hierzu einer Auswechselbarkeit bedarf.

Gemäß einem bevorzugten Ausführungsbeispiel sind die Merkmale nach Anspruch 2 vorgesehen, was gleichzeitig Raum für weitere Bauteile schafft. Dabei kann der Füllstutzen gemäß den Merkmalen nach Anspruch 3 insgesamt einstückig aus Kunststoff sein. Es ist aber auch möglich, die beiden Bauelemente zwei- oder mehrteilig herzustellen und miteinander zu verklipsen oder anderweitig zu verbinden.

Eine einfache Montage des Einfüllstutzens am Kraftfahrzeug oder der stationären Anlage im Wesentlichen unabhängig von der Lage des Flüssigkeitstanks ergibt sich mit den Merkmalen nach Anspruch 4, wobei das Anschlussstück des Einfüllstutzens mit einer Schlauch- oder Rohrleitung verbunden wird. Dabei können die Merkmale nach Anspruch 5 verwirklicht sein, um bspw. weitere Bauelemente, wie Filter, Klappe, Magnet oder dgl. austauschbar einsetzen zu können.

Je nach Ausgestaltung des Einfüllstutzens ist gemäß den Merkmalen nach Anspruch 6 entweder das Gehäuse unmittelbar oder mittelbar über das Anschlussstück am betreffenden Bauteil des Kraftfahrzeugs gehalten.

Mit den Merkmalen nach Anspruch 7 ist eine einfache Möglichkeit der Befestigung eines Verschlussdeckels gegeben.

In bevorzugter Weise ist der Einfüllstutzen mit einer Fehlbetankungsschutzvorrichtung versehen, die gemäß einem Ausführungsbeispiel nach den Merkmalen des Anspruchs 8 und gemäß einem anderen Ausführungsbeispiel gemäß den Merkmalen nach Anspruch 11 ausgestaltet ist. Im ersteren Falle kann die Klappe einerseits durch eine entsprechend ausgebildete Zapfpistole geöffnet werden und andererseits dann, wenn die Merkmale nach Anspruch 9 vorgesehen sind, mittels einer mit Harnstoff befüllten Flasche am Ende von deren Aufsetzvorgang auf den Füllstutzenabschnitt. In letzerem Falle sind bevorzugt die Merkmale nach Anspruch 10 vorgesehen, um eine konstruktiv und herstellungstechnisch einfache Möglichkeit zu erreichen.

Im ersteren Falle, der getrennt oder zusätzlich vorgesehen sein kann und bei dem mit dem Einbringen der Zapfpistole durch Zusammenwirken mit dem Ringmagneten ein Zapfpistolenverschluss geöffnet wird, ist gemäß den Merkmalen nach Anspruch 12 in konstruktiv einfacher Weise die abgedichtete Aufnahme des Ringmagneten innerhalb des Gehäuses gelöst.

Gemäß weiteren Ausführungsformen ist gemäß den Merkmalen nach Anspruch 13 bzw. 14 der mit oder ohne einem Fehlbetankungsschutz versehene Einfüllstutzen mit einem Filterelement innerhalb des Anschlussstücks versehen, wobei gemäß den Merkmalen nach Anspruch 15 das Filtermaterial elastisch und/oder flexibel ausgeführt ist, um bei Vereisungstemperaturen eine Bewegungsmöglichkeit des Filterelements zum Ausgleich der mit der Erstarrung einhergehenden relativ hohen Ausdehnung des gefrorenen Harnstoffs zu erreichen und um Beschädigungen durch das sich ausdehnende gefrorene Medium zu verhindern.

Die Erfindung bezieht sich ferner auf einen Flüssigkeitstank für Harnstoff oder andere Flüssigkeiten an Kraftfahrzeugen oder stationären Anlagen mit den Merkmalen nach Anspruch 16.

Weitere Einzelheiten der Erfindung sind der folgenden Beschreibung zu entnehmen, in der die Erfindung anhand der in der Zeichnung dargestellten Ausführungsbeispiele näher beschrieben und erläutert ist. Es zeigen:

Figur 1 einen Längsschnitt durch einen Einfüllstutzen für einen Flüssigkeitstank für Harnstoff an Kraftfahrzeugen in einer innenseitig verschlossenen Stellung gemäß einem ersten Ausführungsbeispiel vorliegender Erfindung,

Figur 2 eine der Figur 1 entsprechende längsgeschnittene Darstellung, jedoch in geöffneter Befüllstellung,

Figur 3 einen Längsschnitt durch einen Einfüllstutzen für einen Flüssigkeitstank für Harnstoff an Kraftfahrzeugen gemäß einem zweiten Ausführungsbeispiel vorliegender Erfindung,

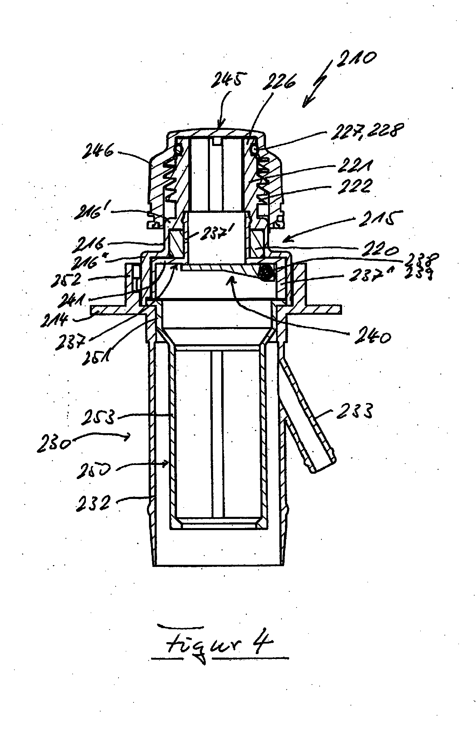

Figur 4 einen Längsschnitt durch einen Einfüllstutzen für einen Flüssigkeitstank für Harnstoff an Kraftfahrzeugen in einer innenseitig verschlossenen Stellung und mit einer Verschlusskappe gemäß einem dritten Ausführungsbeispiel vorliegender Erfindung und

Figur 5A

und 5B eine der Figur 4 entsprechende längsgeschnittene Darstellung, jedoch in geöffneter Befüllstellung in einem Fall mittels einer Zapfpistole und im anderen Fall mittels einer Flasche oder Kanister.

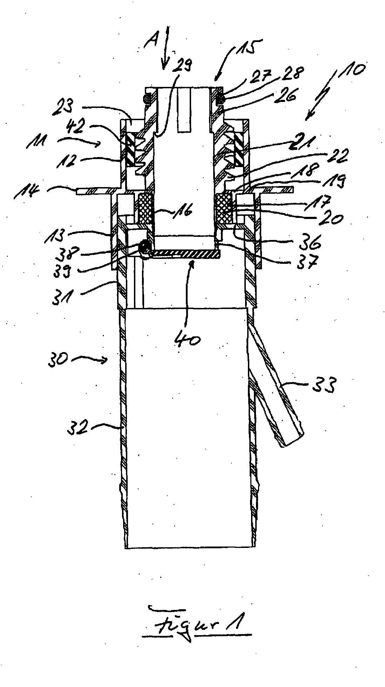

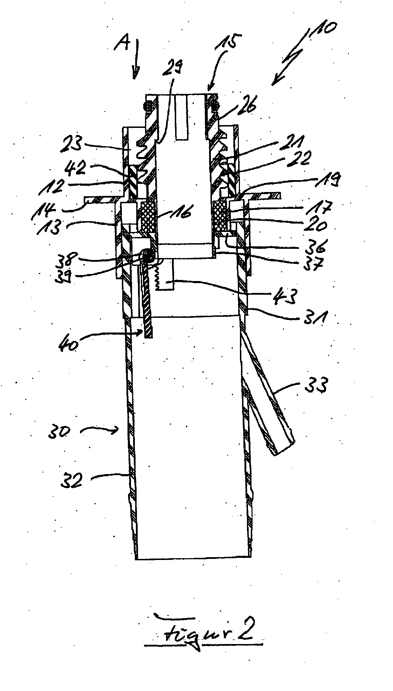

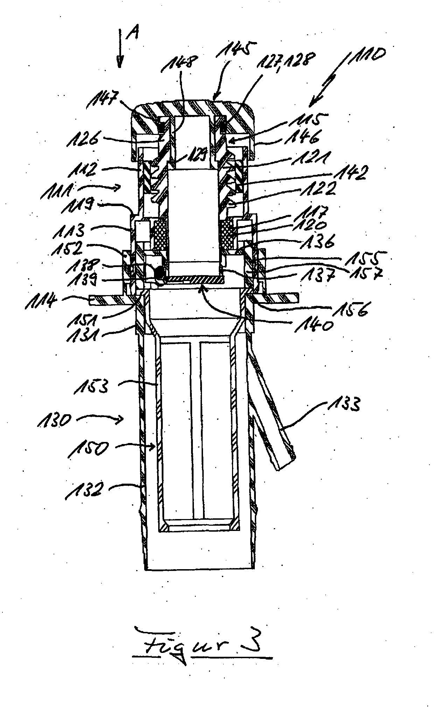

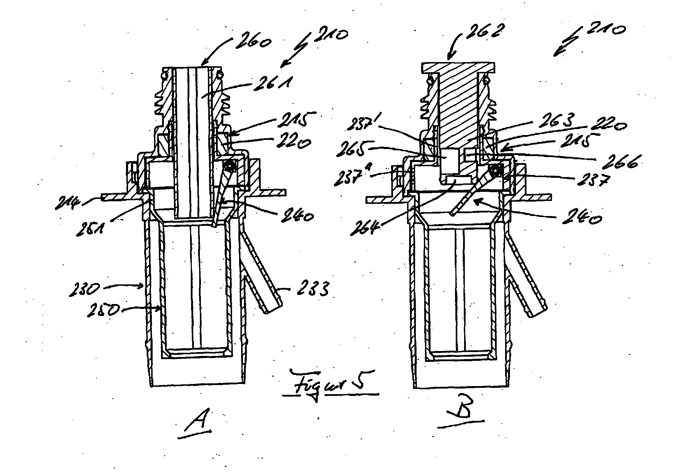

Der in der Zeichnung gemäß dreier Ausführungsbeispiele dargestellte Einfüllstutzen 10 (Figuren 1 und 2) bzw. 110 (Figur 3) beziehungsweise 210 (Figuren 4 und 5) dient zum Befüllen eines Flüssigkeitstanks für Harnstoff an Kraftfahrzeugen oder motorbetriebenen stationären Anlagen, wobei ohne Austausch beziehungsweise Änderung des Einfüllstutzens wahlweise die Betankung mittels einer Zapfpistole und mittels einer mit dem Harnstoff befüllten Flasche oder Kanister bestimmten Inhalts möglich ist. Der Einfüllstutzen 10, 110 beziehungsweise 210 wird in nicht dargestellter Weise an einem Bauteil, bspw. Karosserieteil des Kraftfahrzeugs oder Gehäuseteil einer stationären Anlage befestigt und über eine Rohrleitung, bevorzugt über eine Schlauchleitung mit dem nicht dargestellten Flüssigkeits- beziehungsweise Harnstofftank verbunden. Alternativ kann der Einfüllstutzen direkt auf einem Flüssigkeitstank montiert sein.

Der in den Figuren 1 und 2 gemäß dem ersten Ausführungsbeispiel dargestellte Einfüllstutzen 10 besitzt ein Gehäuse 11, das ein oberes Gehäuseteil 12 und ein unteres Gehäuseteil 13 aufweist, die beide rohrförmig ausgebildet sind und von denen das obere Gehäuseteil 12 durchmesserkleiner als das untere Gehäuseteil 13 ist. Die axialen Längen vom oberem und unterem Gehäuseteil 12, 13 sind etwa gleich. Am schulterartigen Übergang 19 vom oberen zum unteren Gehäuseteil 12, 13 besitzt das Gehäuse 11 einen Ringflansch 14, über den der Einfüllstutzen 10 in nicht dargestellter Weise an einem Bauteil, bspw. einem Karosserieteil des betreffenden Kraftfahrzeugs oder an einem Gehäuseteil einer stationären Anlage befestigt werden kann.

Der Einfüllstutzen 10 besitzt ferner einen Füllstutzenabschnitt 15, der innerhalb des Gehäuses 11 und konzentrisch zu diesem angeordnet ist. Gehäuse 11 und Füllstutzenabschnitt 15 sind beim dargestellten Ausführungsbeispiel einstückig aus Kunststoff geformt. Sie können aber auch mehrteilig verklipst sein. Der Füllstutzenabschnitt 15 überragt axial das freie Ende des oberen Gehäuseteils 12 sowie dessen unteres Ende. Ein unterer Bereich 16 des Füllstutzenabschnitts 15 bildet eine Aufnahme 17 in Form einer ringartigen Nut, deren Oberseite von einem Wandteil 18, das in Höhe des Übergangs 19 zwischen oberem und unterem Gehäuseteil 12, 13 sowie dem Ringflansch 14 angeordnet ist, verschlossen ist und die am unteren Ende offen ist. In die Aufnahme 17 ist ein Ringmagnet 20 abgedichtet eingebettet eingelegt. Der Ringmagnet 20 ist damit in nicht dargestellter Weise über Dichtungen vor der Einwirkung von Harnstoff bzw. Harnstoffdämpfen geschützt.

Ein mittlerer Bereich 21 des Füllstutzenabschnitts 15, der innerhalb des oberen Gehäuseteils 12 angeordnet ist, ist mit einem Außengewinde 22 versehen, zwischen dem und der Innenwandung des oberen Gehäuseteils 12 ein ringförmiger Aufnahmeraum 23, der von oben her gemäß Pfeil A zugängig ist, gebildet ist. Ein sich daran anschließender oberer Bereich 26 des Füllstutzenabschnitts 15 ist außenumfangsseitig sowie innenumfangsseitig glatt, mit der Ausnahme, dass nahe der freien Stirn außenumfangsseitig in einer Ringnut 27 ein O-Ring 28 aufgenommen ist, und innenumfangsseitig am Übergang vom oberen Bereich 26 zum mittleren Bereich 21 eine Ringschulter 29 dadurch gebildet ist, dass der Innendurchmesser des oberen Bereichs 26 kleiner ist als der Innendurchmesser des mittleren Bereichs 21.

In das untere Gehäuseteil 13 des Gehäuses 11 ist ein Anschlussstück 30 mit seinem zylindrischen Verbindungsabschnitt 31 eingeschoben und beim Ausführungsbeispiel durch Kleben oder dergleichen fest gehalten. An den Verbindungsabschnitt 31 fügt sich einstückig und axial ein Anschlussabschnitt 32 an, der sich zu seinem freien Ende hin wanddickenmäßig verjüngt und der der Verbindung mit einem Verbindungsschlauch (nicht dargestellt) dient. Außenumfangsseitig ist der Anschlussabschnitt 32 in einem unteren Bereich mit entsprechenden Ringwulsten zum Halten des übergeschobenen Verbindungsschlauchs versehen. An einer Stelle des Umfangs ist der Anschlussabschnitt 32 mit einem Entlüftungsrohrstück 33 versehen.

Der Verbindungsabschnitt 31 des Anschlussstücks 30 ist an seinem dem Gehäuse 11 zugewandten Ende mit einem radial nach innen vorstehenden Ringflansch 36 versehen, der die Öffnungsseite der Aufnahme 17 für den Ringmagneten 20 verschließt. Radial innenseitg des Ringflansches 36 ist eine axial nach unten gerichtete Hülse 37 angeformt, die an einer Umfangsstelle ihrer freien Stirn ein Lagerauge 38 bildet, in welchem die Schwenkachse 39 einer federbelasteten Klappe 40 angelenkt ist, die die Form einer runden Scheibe aufweist und im Ruhezustand gemäß Figur 1 den Durchtrittsraum innerhalb des Füllstutzenabschnitts 15 verschließt.

Der Füllstutzenabschnitt 15 des Einfüllstutzens 10 kann in zweierlei Art und Weise genutzt werden. Zum einen kann in den Füllstutzenabschnitt 15 eine mit einem zentralen Harnstoffvorratsbehälter verbundene Zapfpistole rüsselseitig eingeführt werden und zum anderen kann auf den Füllstutzenabschnitt 15 eine mit Harnstoff befüllte Flasche oder Kanister bestimmten Volumeninhalts mit der Ausflussöffnung nach unten aufgeschraubt werden.

Sowohl der Ringmagnet 20 als auch die federbelastete Klappe 40 sind Teil einer Fehlbetankungsschutzvorrichtung, die ein versehentliches Einfüllen einer anderen Flüssigkeit als Harnstoff in den Einfüllstutzen 10 beziehungsweise in den Harnstofftank verhindern soll.

Der Ringmagnet 20 wirkt in nicht dargestellter Weise mit einer Verschlusssteuerung der verwendeten Zapfpistole derart zusammen, dass die Harnstoffzufuhr nur dann freigegeben wird, wenn der Rüssel der passenden Zapfpistole in den Füllstutzenabschnitt 15 eingebracht ist. Darüber hinaus muss der Rüssel der Zapfpistole mit einem in den Füllstutzenabschnitt 15 passenden Durchmesser versehen sein. Am Ende des Einbringens des Rüssels der Zapfpistole in den Füllstutzenabschnitt 15 wird die federbelastete Klappe 40 mit Hilfe der Zapfpistole geöffnet, so dass Harnstoff einströmen kann.

Wie aus Figur 2 ersichtlich ist, ist die federbelastete Klappe 40 im Bereich ihrer Schwenkachse 39 mit einem Antriebsteil 42 in Form eines Zylinderstücks verbunden, das in einem zwischen mittleren Bereich 21 des Füllstutzenabschnitts 15 und oberem Gehäuseteil 12 des Gehäuses 11 gebildeten Ringkanal 36 geführt gehalten ist. Beim dargestellten Ausführungsbeispiel ist angedeutet, dass der Antriebsteil 42 mit einer Zahnstange 43 oder einem ähnlichen Element axial bewegungsschlüssig gekoppelt ist, wobei bspw. die Zahnstange 43 mit einem nicht dargestellten Ritzel kämmt, das mit der Schwenkachse 39 drehfest verbunden ist und so die Klappe 40 um etwa 90° verschwenken kann. Mit anderen Worten, wird auf das obere freie Ende des Füllstutzenabschnitts 15 eine mit Harnstoff befüllte Flasche oder Kanister aufgesetzt und aufgeschraubt, bewegt sich die freie Stirnkante der nicht dargestellten Flasche / Kanister axial nach unten und drückt damit auf das Zylinderstück 42, dessen axiales Bewegungsende durch das Wandteil 18 zwischen Füllstutzenabschnitt 15 und Gehäuse 11 gegeben ist. Damit ist der Strömungsweg für den in der Flasche / Kanister aufgenommenen Harnstoff durch das Anschlussstück 30 geöffnet.

Der in Figur 3 gemäß einem zweiten Ausführungsbeispiel dargestellte Einfüllstutzen 110 ist ähnlich aufgebaut, wobei die Verbindung von Gehäuse 111 und Anschlussstück 130 in anderer Weise gelöst und der Einfüllstuten 110 mit einem Filterelement 150 in Form eines feinmaschigen Siebes versehen ist, dessen Siebmaterial elastisch und/oder flexibel ausgestaltet ist.

Bei diesem zweiten Ausführungsbeispiel ist die einstückige Anordnung aus Gehäuse 111 und Füllstutzenabschnitt 115 in nahezu gleicher Weise ausgebildet, mit dem Unterschied, dass das Gehäuse 111 keinen Befestigungsringflansch wie in den Figuren 1 und 2 den Ringflansch 14 besitzt und dass das Gehäuse 111 mit dem Anschlussstück 130 lösbar verbunden ist.

Am oberen Ende des Füllstutzenabschnitts 115 und des oberen Gehäuseteils 112 des Gehäuses 111 ist ein Verschlussdeckel 145 vorgesehen, der über den oberen Gehäuseteil 112 mit seinem Ringrand 146 greift, der mit einer durchmesserkleineren Innenfläche 147 am O-Ring 128 dicht anliegt und der mit einer axial in Richtung des Pfeiles A vorstehenden einstückig und mittig angeformten Hülse 148 in den Füllstutzenabschnitt 115 greift und hinter der Ringschulter 129 rastet. Diese Verrastung ist beispielsweise eine Bajonettverschlussverrastung. Ein solcher Verschlussdeckel 145 kann in genau derselben Weise und in derselben konstruktiven Ausgestaltung beim Einfüllstutzen 10 nach den Figuren 1 und 2 angewendet werden. Die Abdichtung des Verschlussdeckels 145 gegenüber dem Füllstutzenabschnitt 115 kann statt über den radial wirkenden O-Ring 128 über eine stirnseitige, axial wirkende Flachdichtung erfolgen.

Das Gehäuse 111 ist mit dem Anschlussstück 130 lösbar verrastbar verbunden, indem das untere Gehäuseteil 113 mit einem axialen Ringsteg 152 des Anschlussstücks 130 verrastet. Dieser axiale Ringsteg 152 ist an einem als Befestigungsflansch dienenden Ringflansch 114 gehalten, der radial absteht und beispielsweise mit einem Karosseriebereich des Kraftfahrzeugs oder Gehäusebereichs der stationären Anlage verbindbar ist.

In der Aufnahme 117 des Füllstutzenabschnitts 115 ist der Ringmagnet 120 wie beim ersten Ausführungsbeispiel abgedichtet eingebettet untergebracht, wobei ihre axiale Öffnungsseite jedoch nicht vom Anschlussstück 130 sondern von einem Zwischenstück 155 abgedeckt ist. Dieses Zwischenstück 155 befindet sich zwischen Füllstutzenabschnitt 115 und einer Schulter 156 des Anschlussstücks 130 und besitzt einen Rohrabschnitt 157, der den Ringflansch 136 sowie die axiale Hülse 137 mit dem Lagerauge 138 trägt, an welchem die Schwenkachse 139 der federbelastete Klappe 140 gehalten ist, die wie beim ersten Ausführungsbeispiel in Form einer Scheibe den Strömungsraum durch den Füllstutzenabschnitt 115 im Ruhezustand federbelastet verschließt.

Gemäß Figur 3 ist das Filterelement 150 konzentrisch innerhalb des Anschlussstücks 130 angeordnet, wobei dessen oberer Rahmenteil 151 zwischen die Schulter 156 des Anschlussstücks 130 und das Zwischenstück 155 geklemmt und damit am Anschlussstück 130 aufgehängt ist. Der in axialem Anschluss an den Aufhängeabschnitt (oberer Rahmenteil) 151 anschließende, die Filterwirkung aufweisende Abschnitt (unterer Rahmenteil) 153 des Filterelements 150 ist mit dem elastischen und/oder flexiblen Filtermaterial versehen bzw. bespannt und innerhalb des Anschlussabschnitts 132 konzentrisch angeordnet. Der Anschlussabschnitt 132 ist wie beim ersten Ausführungsbeispiel zur überstülpenden Verbindung mit einem Verbindungsschlauch ausgebildet und besitzt wie beim ersten Ausführungsbeispiel einen Entlüftungsanschluss 133.

Die Aufgabe und die Wirkung dieses Einfüllstutzens 110 sind dieselben wie beim Einfüllstutzen 10 beschrieben. Mit anderen Worten, nach Abnahme des Verschlussdeckels 145 kann über den Einfüllstutzen 110 der Flüssigkeitstank sowohl mit einer Zapfpistole als auch mit einer mit Harnstoff befüllten Flasche oder Kanister befüllt werden, wobei auch hier die Fehlbetankungsschutzvorrichtung in entsprechender Weise aktiviert werden kann beziehungsweise worden ist (mittels Ringmagnet 120 beziehungsweise Antriebsteil 142 zum Verschwenken der Klappe 140).

Der in den Figuren 4 und 5A sowie 5B gemäß einem dritten Ausführungsbeispiel dargestellte Einfüllstutzen 210 ist ähnlich dem dritten Ausführungsbeispiel nach Figur 3 aufgebaut, und zwar was die lösbare Verbindung von Füllstutzenabschnitt 215 mit dem Anschlussstück 230 sowie das Vorsehen einer Fehlbetankungsschutzvorrichtung aus Ringmagnet 220 und federbelasteter Klappe 240 anbetrifft.

Gemäß Figur 4 besitzt der Einfüllstutzen 210 kein gesondertes Gehäuse sondern lediglich einen auch als Gehäuse dienenden Füllstutzenabschnitt 215, der einen mittleren mit einem Außengewinde 222 versehenen Bereich 221 sowie einen oberen Bereich 226, der mit einer Ringnut 227 und einem darin gefassten O-Ring 228 versehen ist, sowie einen unteren Bereich 216 aufweist, der bei diesem Ausführungsbeispiel zweifach gestuft ausgebildet ist. Die dem Außengewinde 222 benachbarte erste Stufe 216' erstreckt sich radial etwa entsprechend dem maximalen Durchmesser des Außengewindes 222, während die zweite Stufe 216"radial weiter ausladend ist und etwa dem Schulterübergang 119 des dritten Ausführungsbeispiels entspricht. Der Füllstutzenabschnitt 215 ist einstückig geformt. Auch hier kann die radial wirkende Dichtungsanordnung des oberen Bereichs 226 für einen Verschlussdeckel 245 ersetzt sein durch eine ringstirnseitig auf dem oberen Bereich 226 aufgebrachte axial wirkende Flachdichtung zur Innenseite des Verschlussdeckels 245 hin.

Der Verschlussdeckel 245 besitzt einen mit einem Innengewinde versehenen Mantel bzw. Ringrand 246, dessen freies Ende in gemäß Figur 4 aufgeschraubtem Zustand die erste Stufe 216' des unteren Bereichs 216 des Füllstutzenabschnitts 215 umgibt.

In den zweifach gestuften unteren Bereich 216 des Füllstutzenabschnitts 215 ist eine gestufte Hülse 237 eingesetzt, deren durchmesserkleinerer Teil 237' innerhalb der ersten radialen Erweiterung 216' des unteren Bereichs 216 angeordnet und deren durchmessergrößerer Teil 237" sich innerhalb des radial am größten aufgeweiteten Teils 216" des unteren Bereichs 216 befindet. Diese gestufte Hülse 237 ist innenseitig am freien Ende des durchmesserkleineren Teils 237' in die Innenwandung des oberen Bereichs 226 des Füllstutzenabschnitts 215 vorzugsweise lösbar verrastend gehalten, wobei zwischen dem durchmesserkleinern Teil 237' der gestuften Hülse 237 und dem ersten Stufenbereich 216' des unteren Bereichs 216 des Füllstutzenabschnitts 215 ein Freiraum zur Aufnahme eines Ringmagneten 220 gegeben ist, der von den anliegenden Wandbereichen abgedichtet und eingebettet umgeben ist.

An der Unterseite des Schulterübergangs 241 der gestuften Hülse 237 ist ein Lagerauge 238 angeformt, an dem eine Schwenkachse 239 einer federbelastenden Klappe 240 gehalten ist. Die im Wesentlichen runde Klappe 240 ist wie bei den beiden andern Ausführungsbeispielen derart ausgestaltet, dass sie die Öffnung des durchmesserkleineren Teils 237' der Hülse 237 zum durchmessergrößeren Teil 237" der Hülse 237 hin vollständig überdeckt.

Das Anschlussstück 230 entspricht in etwa dem Anschlussstück 130 des zweiten Ausführungsbeispiels nach Figur 3, wobei der Ringsteg 252 oberhalb des Ringflansches 214 innenumfangsseitig derart ausgebildet ist, dass der Füllstutzenabschnitt 215 mit dem durchmessergrößten Teil 216" des unteren Bereichs 216 lösbar aufgenommen werden kann, was hier beispielsweise mittels einer Bajonettverschlussanordnung vorgenommen ist, die mit einer in nicht dargestellter Weise beispielsweise nur von einem Servicepersonal mittels Werkzeug zugänglichem Riegel entriegelt werden kann.

Auch bei diesem Ausführungsbeispiel ist wie beim zweiten Ausführungsbeispiel nach Figur 3 ein Filterelement 250 vorgesehen, das zwischen Füllstutzenabschnitt 215 bzw. gestufter Hülse 237 einerseits und dem Anschlussstück 230 andererseits geklemmt werden kann. Dabei befindet sich entsprechend der Figur 3 der untere Rahmenteil 253 konzentrisch innerhalb des Anschlussabschnitts 232. Auch hier ist der untere Rahmenteil 253 in nicht dargestellter Weise mit einem elastischen und/oder flexiblen Filtermaterial versehen bzw. bespannt.

Nach Abschrauben des Verschlussdeckels 245 zeigen die Figuren 5A und 5B die Befüllmöglichkeiten mit der betreffenden Flüssigkeit durch den Füllstutzenabschnitt 215 hindurch in einen nicht dargestellten Tank. Figur 5A zeigt den Rüssel 261 einer Spritzpistole 260, wobei der Rüssel 261 einen dem Innendurchmesser des Füllstutzenabschnitts 215 entsprechenden Außendurchmesser aufweist. Mit dem vorderen Auslaufende des Rüssels 261 kann die Klappe 240 entgegen der Wirkung der Zuhaltefeder aufgestoßen werden, so dass der Rüssel 261 teilweise in den oberen Rahmenteil 251 des Filterelements 250 ragt. Nachdem der Rüssel 261 an dem Ringmagneten 220 vorbei geführt worden ist, wird über eine nicht dargestellte Steuerung der Zufluss der betreffenden Flüssigkeit durch die Spritzpistole 216 zugeschaltet.

Nach Figur 5B wird, wie lediglich schematisch dargestellt, eine Auslaufventilanordnung 263 einer Flasche oder eines Kanisters 262 auf und in den Füllstutzenabschnitt 215 gebracht, wobei durch eine Relativbewegung dieses Auslaufventils 263 das Mündungsende 264 soweit verschoben wird, dass es, wie beim Rüssel der Spritzpistole die Klappe 240 in Öffnungsrichtung aufstößt bzw. verschwenkt. Das Mündungsende 264 besitzt eine umfangsseitige Auslauföffnung 265 sowie eine diagonal abgewandte umfangsseitige Belüftungsöffnung 266. Während die Auslauföffnung 265 in den Raum innerhalb des durchmessergrößeren Teils 237" der Hülse 237, die mit dem Raum innerhalb des Filterelements 250 verbunden ist, ragt, besitzt die Belüftungsöffnung 266 in nicht im einzelnen dargestellter Weise eine Verbindung einerseits sowohl zu diesem Raum innerhalb des Hülsenbereichs 237' als auch nach innerhalb der Flasche 262 bzw. Kanister.

Hieraus ist ersichtlich, dass beim dritten Ausführungsbeispiel nach den Figuren 4 und 5 die Klappe 240 nicht mittelbar durch ein Antriebsteil sondern unmittelbar durch das Füllorgan, nämlich eine Spritzpistole 260 oder eine Flasche 262 geöffnet wird.

Die Ausführung des Einfüllstutzens 10, 110, 210 in Form des der füllenden Aufnahme sowohl mit einer Zapfpistole als auch mit einer Flasche bzw. Kanister dienenden Füllstutzenabschnitts 15, 115, 215 kann bevorzugt mit einem Filterelement 150, 250 zum Verhindern von Schmutzeintrag und/oder mit einer Fehlbetankungsschutzvorrichtung in Form eines ein Strömungsventil beeinflussenden Ringmagnets 20, 120, 220 und/oder einer federbelasteten öffnenbaren Verschlussklappe 40, 140, 240 kombiniert werden.

## Patentansprüche

1. Einfüllstutzen (10, 110. 210) für einen Flüssigkeitstank für Harnstoff oder andere Flüssigkeiten an Kraftfahrzeugen oder stationären Anlagen, mit einem Anschlussstück (30, 130, 230), das mittelbar oder unmittelbar an einem Bauteil des Kraftfahrzeugs oder der stationären Anlage befestigbar und/oder mit dem Flüssigkeitstank verbunden ist und mit einem lösbar abnehmbaren Verschlussdeckel (145, 245), wobei das Anschlussstück (30, 130, 230) mit einem axial verlaufenden Füllstutzenabschnitt (15, 115, 215) bestückt ist, **dadurch gekennzeichnet, dass** an einem oberen Bereich (26) am Außenumfang des Füllstutzenabschnitts (15) eine Ringnut (27) ausgebildet ist, und dass in der Ringnut (27) ein O-Ring (28) aufgenommen ist, sodass der Füllstutzenabschnitt (15, 115, 215) sowohl der eintauchenden Aufnahme einer Zapfpistole für die Flüssigkeit als auch der aufsetzbaren Halterung einer mit der Flüssigkeit befüllten Flasche bzw. Kanister dient.

2. Einfüllstutzen nach Anspruch 1, **dadurch gekennzeichnet, dass** der Füllstutzenabschnitt (15, 115) konzentrisch innerhalb eines Gehäuses (11, 111) angeordnet ist.

3. Einfüllstutzen nach Anspruch 2, **dadurch gekennzeichnet, dass** das Gehäuse (11, 111) und der Füllstutzenabschnitt (15, 115) einstückig aus Kunststoff sind.

4. Einfüllstutzen nach mindestens einem der vorhergehenden Ansprüche, **dadurch gekennzeichnet, dass** das Gehäuse (11, 111) und/oder der Füllstutzenabschnitt (15, 115, 215) mit dem Anschlussstück (30, 130, 230) für eine Verbindungsleitung, vorzugsweise einem Verbindungsschlauch zum Flüssigkeitstank verbunden ist.

5. Einfüllstutzen nach Anspruch 4, **dadurch gekennzeichnet, dass** das Gehäuse (11, 111) oder der Füllstutzenabschnitt (215) mit dem Anschlussstück (30, 130, 230) lösbar verbindbar ist.

6. Einfüllstutzen nach mindestens einem der vorhergehenden Ansprüche, **dadurch gekennzeichnet, dass** das Gehäuse (11, 111) oder das Anschlussstück (30, 130, 230) mit einem Flansch (14, 114, 214) zur Halterung an einem Bauteil eines Kraftfahrzeugs oder einer stationären Anlage versehen ist.

7. Einfüllstutzen nach mindestens einem der vorhergehenden Ansprüche, **dadurch gekennzeichnet, dass** der Füllstutzenabschnitt (15, 115, 215) außen-oder innenumfangsseitig mit einem Gewinde (222) bzw. einer Ringschulter (29, 129) zur schraubenden oder rastenden Verbindung mit dem Verschlussdeckel (145, 245) versehen ist.

8. Einfüllstutzen nach mindestens einem der Ansprüche 1 bis 7, **dadurch gekennzeichnet, dass** er mit einer Fehlbetankungsschutzvorrichtung versehen ist, die durch eine federbelastete Klappe (40, 140, 240) gebildet Ist, die im Bereich des inneren Endes des Füllstutzenabschnitts (15, 115, 215) vorgesehen ist.

9. Einfüllstutzen nach Anspruch 8, **dadurch gekennzeichnet, dass** zwischen dem mit einem Außengewinde (22, 122) für eine mit Harnstoff befüllte Flasche oder Kanister versehenen Füllstutzenabschnitt (15, 115) und dem Gehäuse (11, 111) ein axial bewegbares Antriebsteil (42, 142) zum Verschwenken der Klappe (40. 140) vorgesehen ist.

10. Einfüllstutzen nach Anspruch 8, **dadurch gekennzeichnet, dass** die federbelastete Klappe (40, 140), die vorzugsweise an einem an einer umfangsseitigen Stelle radial nach innen abstehenden Schwenklager (38, 138) gehalten ist, vorn Rüssel einer Zapfpistole oder dem Mündungsende einer Flasche bzw. Kanister unmittelbar aufstoßbar ist.

11. Einfüllstutzen nach mindestens einem der Ansprüche 1 bis 7, **dadurch gekennzeichnet, dass** er mit einer Fehlbetankungsschutzvorrichtung versehen ist, die durch einen den Füllstutzenabschnitt (15, 115, 215) umgebenden Ringmagneten (20, 120, 220) gebildet ist, der mit einem Schließmechanismus der Zapfpistole zusammenwirkt.

12. Einfültstutzen nach Anspruch 11, **dadurch gekennzeichnet, dass** der Ringmagnet (20, 120) in einer nutartigen Aufnahme des Füilstutzenabschnitts (15, 115) abgedichtet eingebettet eingebracht ist, die von einem sich radial und/oder axial erstreckenden Wandteil (18, 118, 218) des Anschlussstücks (30) oder eines Zwischenstücks (155, 237) abgedeckt ist

13. Einfüllstutzen nach mindestens einem der vorhergehenden Ansprüche, **dadurch gekennzeichnet, dass** er mit einem an den Füllstutzenabschnitt (115, 215) axial anschließenden Filterelement (150, 250) versehen ist, das innerhalb des Anschlussstücks (30, 130, 230) gehalten ist.

14. Einfüllstutzen nach mindestens einem der Ansprüche 1 bis 3 und 12, **dadurch gekennzeichnet, dass** er (10, 110, 210) mit einem konzentrisch und lösbar eingesetzten Filterelement (150, 250) versehen ist, das innerhalb des Füllstützenabschnitts (115, 215) gehalten ist.

15. Einfüllstutzen nach Anspruch 13 oder 14, **dadurch gekennzeichnet, dass** das Material des Filterelements (150, 250) flexibel und/oder elastisch ausgeführt ist.

16. Flüssigkeitstank für Harnstoff oder andere Flüssigkeiten an Kraftfahrzeugen oder stationären Anlagen mit einem Einfüllstutzen (10, 110, 210) nach Anspruch 1 und gegebenenfalls mindestens einem der folgenden Ansprüche.

## Claims

1. A filler neck (10, 110, 210) for a liquid tank for urea or other liquids in motor vehicles or stationary systems, having a connection piece (30, 130, 230), which can be secured directly or indirectly to a component of the motor vehicle or the stationary system and/or communicates with the liquid tank, and having a detachably removable closure cap (145, 245), the connection piece (30, 130, 230) being equipped with an axially extending filler neck portion (15, 115, 215), **characterized in that** an annular groove (27) is embodied on an upper region (26) on the outer circumference of the filler neck portion (15); and that an O-ring (28) is received in the annular groove (27), so that the filler neck portion (15, 115, 215) serves the purpose of both receiving an inserted pump handle for the liquid and slip-on mounting of a bottle or canister filled with the liquid.

2. The filler neck of claim 1, **characterized in that** the filler neck portion (15, 115) is located concentrically inside a housing (11, 111).

3. The filler neck of claim 2, **characterized in that** the housing (11, 111) and the filler neck portion (15, 115) are in one piece and comprise plastic.

4. The filler neck of at least one of the foregoing claims, **characterized in that** the housing (11, 111) and/or the filler neck portion (15, 115, 215) communicates with the connection piece (30, 130, 230) for a connecting line, preferably a connecting hose, to the liquid tank.

5. The filler neck of claim 4, **characterized in that** the housing (11, 111) or the filler neck portion (215) can be connected detachably to the connection piece (30, 130, 230).

6. The filler neck of at least one of the foregoing claims, **characterized in that** the housing (11, 111) or the connection piece (30, 130, 230) is provided with a flange (14, 114, 214) for mounting on a component of a motor vehicle or of a stationary system.

7. The filler neck of at least one of the foregoing claims, **characterized in that** the filler neck portion (15, 115, 215) is provided on the outer or inner circumference with a thread (222) or an annular shoulder (29, 129) for connection to the closure cap (145, 245) in screw-in or detent fashion.

8. The filler neck of at least one of claims 1 through 7, **characterized in that** it is provided with a device for guarding against incorrect fueling, which device is formed by a spring-loaded flap (40, 140, 240) that is provided in the vicinity of the inner end of the filler neck portion (15, 115, 215).

9. The filler neck of claim 8, **characterized in that** between the filler neck portion (15, 115), provided with a male thread (22, 122) for a bottle or canister filled with urea, and the housing (11, 111), an axially movable drive part (42, 142) for pivoting the flap (40, 140) is provided.

10. The filler neck of claim 8, **characterized in that** the spring-loaded flap (40, 140), which is preferably mounted on a pivot bearing (38, 138) protruding radially inward at a circumferential point, can be forced open directly by the nozzle of a pump handle or the end of the mouth of a bottle or canister.

11. The filler neck of at least one of claims 1 through 7, **characterized in that** it is provided with a device for protecting against incorrect fueling, which device is formed by a ring magnet (20, 120, 220), surrounding the filler neck portion (15, 115, 215), which magnet cooperates with a closure mechanism of the pump handle.

12. The filler neck of claim 11, **characterized in that** the ring magnet (20, 120) is placed in sealed, embedded fashion in a groovelike receptacle of the filler neck portion (15, 115), which receptacle is covered by a radially and/or axially extending wall part (18, 118, 218) of the connection piece (30) or of an intermediate part (155, 237).

13. The filler neck of at least one of the foregoing claims, **characterized in that** it is provided with a filter element (150, 250), which axially adjoins the filler neck portion (115, 215) and is mounted inside the connection piece (30, 130, 230).

14. The filler neck of at least one of claims 1 through 3 and 12, **characterized in that** it (10, 110, 210) is provided with a filter element (150, 250), which is inserted concentrically and detachably and which is mounted inside the filler neck portion (115, 215).

15. The filler neck of claim 13 or 14, **characterized in that** the material of the filter element (150, 250) is embodied flexibly and/or elastically.

16. A liquid tank for urea or other liquids in motor vehicles or stationary systems, having a filler neck (10, 110, 210) of claim 1 and optionally of at least one of the claims following it.

## Revendications

1. Tubulure de remplissage (10, 110, 210) pour un réservoir de liquide pour l'urée ou d'autres liquides sur des véhicules automobiles ou installations stationnaires, comprenant une pièce de raccordement (30, 130, 230) qui peut être fixée indirectement ou directement sur un composant du véhicule automobile ou de l'installation stationnaire et/ou est reliée au réservoir de liquide, ainsi qu'un couvercle (145, 245) détachable de manière amovible, ladite pièce de raccordement (30, 130, 230) étant équipée d'un tronçon de tubulure de remplissage (15, 115, 215) s'étendant axialement, **caractérisée par le fait qu'**une rainure annulaire (27) est réalisée sur une zone supérieure (26) sur la circonférence extérieure du tronçon de tubulure de remplissage (15), et qu'un joint torique (28) est reçu dans ladite rainure annulaire (27) de sorte que ledit tronçon de tubulure de remplissage (15, 115, 215) sert aussi bien à la réception plongeante d'un pistolet de distribution pour le liquide qu'au maintien avec possibilité de pose d'une bouteille ou bien d'un bidon rempli(e) du liquide.

2. Tubulure de remplissage selon la revendication 1, **caractérisée par le fait que** ledit tronçon de tubulure de remplissage (15, 115) est disposé de manière concentrique à l'intérieur d'un boîtier (11, 111).

3. Tubulure de remplissage selon la revendication 2, **caractérisée par le fait que** ledit boîtier (11, 111) et le tronçon de tubulure de remplissage (15, 115) sont en une seule pièce en matière plastique.

4. Tubulure de remplissage selon l'une au moins des revendications précédentes, **caractérisée par le fait que** ledit boîtier (11, 111) et/ou ledit tronçon de tubulure de remplissage (15, 115, 215) est relié à la pièce de raccordement (30, 130, 230) pour une conduite de liaison, de préférence à un tuyau flexible de liaison vers le réservoir de liquide.

5. Tubulure de remplissage selon la revendication 4, **caractérisée par le fait que** ledit boîtier (11, 111) ou le tronçon de tubulure de remplissage (215) peut être relié de manière amovible à ladite pièce de raccordement (30, 130, 230).

6. Tubulure de remplissage selon l'une au moins des revendications précédentes, **caractérisée par le fait que** ledit boîtier (11, 111) ou ladite pièce de raccordement (30, 130, 230) est pourvu(e) d'une bride (14, 114, 214) de maintien sur un composant du véhicule automobile ou d'une installation stationnaire.

7. Tubulure de remplissage selon l'une au moins des revendications précédentes, **caractérisée par le fait que** ledit tronçon de tubulure de remplissage (15, 115, 215) est pourvu, sur la circonférence extérieure ou intérieure, d'un filetage (222) ou bien d'un épaulement annulaire (29, 129) pour la liaison par vissage ou encliquetage avec ledit couvercle (145, 245).

8. Tubulure de remplissage selon l'une au moins des revendications 1 à 7, **caractérisée par le fait qu'**elle est pourvue d'un dispositif de protection contre l'erreur de carburant qui est formé par un clapet (40, 140, 240) chargé par ressort qui est prévu au niveau de l'extrémité intérieure du tronçon de tubulure de remplissage (15, 115, 215).

9. Tubulure de remplissage selon la revendication 8, **caractérisée par le fait qu'**une pièce d'entraînement (42, 142) axialement déplaçable pour faire pivoter ledit clapet (40, 140) est prévue entre le tronçon de tubulure de remplissage (15, 115) pourvu d'un filetage extérieur (22, 122) pour une bouteille ou un bidon rempli(e) d'urée et ledit boîtier (11, 111).

10. Tubulure de remplissage selon la revendication 8, **caractérisée par le fait que** ledit clapet (40, 140) chargé par ressort qui, de préférence, est maintenu sur un palier d'articulation (38, 138) faisant saillie radialement vers l'intérieur à un endroit circonférentiel, peut être ouvert directement par le prolongement d'un pistolet de distribution ou l'extrémité de bouche d'une bouteille ou bien d'un bidon.

11. Tubulure de remplissage selon l'une au moins des revendications 1 à 7, **caractérisée par le fait qu'**elle est pourvue d'un dispositif de protection contre l'erreur de carburant qui est formé par un aimant en anneau (20, 120, 220) qui entoure ledit tronçon de tubulure de remplissage (15, 115, 215) et agit de concert avec un mécanisme de fermeture du pistolet de distribution.

12. Tubulure de remplissage selon la revendication 11, **caractérisée par le fait que** ledit aimant en anneau (20, 120) est inséré, de manière à être encastré à étanchéité, dans un logement de type rainure du tronçon de tubulure de remplissage (15, 115), qui est recouvert d'une partie de paroi (18, 118, 218) s'étendant radialement et/ou axialement de la pièce de raccordement (30) ou d'une pièce intercalaire (155, 237).

13. Tubulure de remplissage selon l'une au moins des revendications précédentes, **caractérisée par le fait qu'**elle est pourvue d'un élément filtrant (150, 250) se joignant axialement au tronçon de tubulure de remplissage (115, 215) et qui est maintenu à l'intérieur de ladite pièce de raccordement (30, 130, 230).

14. Tubulure de remplissage selon l'une au moins des revendications 1 à 3 et 12, **caractérisée par le fait qu'**elle (10, 110, 210) est pourvue d'un élément filtrant (150, 250) inséré de manière concentrique et amovible qui est maintenu à l'intérieur du tronçon de tubulure de remplissage (115, 215).

15. Tubulure de remplissage selon la revendication 13 ou 14, **caractérisée par le fait que** la matière dudit élément filtrant (150, 250) est réalisée de manière flexible et/ou élastique.

16. Réservoir de liquide pour l'urée ou d'autres liquides sur des véhicules automobiles ou installations stationnaires, avec une tubulure de remplissage (10, 110, 210) selon la revendication 1 et, le cas échéant, l'une au moins des revendications suivantes.
